# EUROPEAN PATENT APPLICATION

(11) **EP 4 596 606 A1**
(43) Date of publication of application: **06.08.2025**
(21) Application number: 23872074.2
(22) Date of filing: 20.09.2023
(51) Int. Cl.: C08G 73/06, C08G 65/48, H01B 7/02

(54) **CURABLE COMPOSITION**

(30) Priority: 26.09.2022 JP 2022152875
(71) Applicant: Daicel Corporation, Osaka-shi, Osaka 530-0011 (JP)
(72) Inventor: MIKI, Ayano, Tokyo 108-8230 (JP); NAKATANI, Kouji, Tokyo 108-8230 (JP)
(74) Representative: Grünecker Patent- und Rechtsanwälte PartG mbB
(86) International application number: PCT/JP2023/034090
(87) International publication number: WO 2024/070846

(57) **Abstract**

Provided is a curable composition excellent in solvent solubility and curable at a low temperature in the presence of oxygen. The curable composition of the present disclosure contains a compound (A) represented by Formula (1) shown below and a curing accelerator (B). The curing accelerator (B) is one or more selected from the group consisting of: a reaction product of meta-xylylenediamine; a quaternary phosphonium salt; a phosphonium salt having a carboxy group; a 2-ethylhexanoate salt that is a thermally latent base generator and has a carboxy group; a secondary monoamine; an imidazole-based compound; and a low-molecular-weight maleimide.

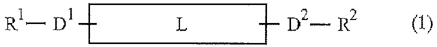

## Description

### Technical Field

The present disclosure relates to a curable composition. More specifically, the present disclosure relates to a curable composition having excellent solvent solubility and curable at a low temperature in the presence of oxygen. The present application claims priority from JP 2022-152875 filed in Japan on September 26, 2022, the content of which is incorporated herein by reference.

### Background Art

Engineering plastics are high-performance materials having enhanced heat resistance and mechanical properties, and are materials essential for miniaturization, weight reduction, performance enhancement and reliability enhancement of various components. However, for example, polyimide is one of the engineering plastics but is difficult to use for producing a molded body suitable for an application due to its difficulty in dissolving in a solvent and melting..

In particular, polyether ether ketone (PEEK), which is also called "super engineering plastic", is a thermoplastic resin having excellent performance in heat resistance, flame retardance, and electrical properties at a continuous use temperature of 260°C. However, PEEK has a melting point of 343°C, and thus is especially difficult to melt and difficult to dissolve in a solvent. As a result, PEEK has poor workability and is difficult to use for producing a molded body.

Meanwhile, a known curable compound having a PEEK skeleton can be molded into a cured product. Since the curable compound is easy to melt and is excellent in solvent solubility, handleability and workability are good, and a cured product and a molded body having a PEEK skeleton can be easily obtained (see Patent Documents 1 to 3).

### Citation List

### Patent Document

Patent Document 1: JP 2021-95542 A
Patent Document 2: JP 2021-95544 A
Patent Document 3: WO 2019/244693 A

### Summary of Invention

### Technical Problem

The curable compound may be required to be curable at a relatively low temperature. It is conceivable to use a peroxide as a curing agent for curing the curable compound at a low temperature. However, peroxides are deactivated by oxygen, and thus a cured product having stable quality is difficult to form in a system, such as an air atmosphere, in which oxygen is present. When a peroxide is used as the curing agent, it is necessary to perform the curing under a nitrogen atmosphere, while when no peroxide is used, a high temperature treatment of 300°C or more is required.

An object of the present disclosure is to provide a curable composition excellent in solvent solubility and curable at a low temperature in the presence of oxygen.

### Solution to Problem

As a result of intensive studies to solve the above problems, the inventors of the present disclosure have found that a curable composition having excellent solvent solubility and curable at a low temperature in the presence of oxygen can be obtained by using a specific curable compound and a specific curing accelerator in combination. The present disclosure relates to what has been completed based on these findings.

That is, the present disclosure provides a curable composition containing a compound (A) and a curing accelerator (B) described below:
the compound (A): a compound represented by Formula (1) shown below: 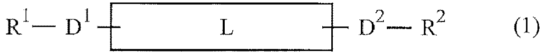
wherein R¹ and R² are the same or different, and each is a group represented by the Formula (r-1) shown below: 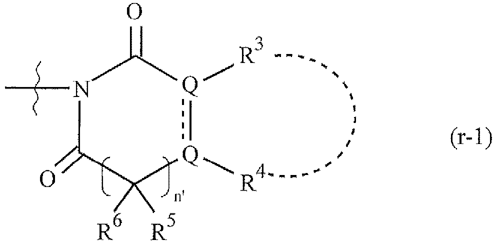
wherein Q is C or CH, two Qs are bound via a single bond or a double bond, R³ to R⁶ are the same or different, and each is a hydrogen atom or a hydrocarbon group, R³ and R⁴ may be bound together to form a ring, n' is an integer equal to or greater than 0, and a bond with a wavy line binds to D¹ or D², wherein D¹ and D² are the same or different, and each is a single bond or a linking group, and L is a divalent group having a repeating unit including a structure represented by Formula (I) shown below and a structure represented by Formula (II) shown below: 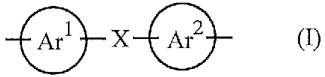 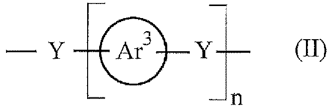
wherein Ar¹ to Ar³ are the same or different, and each is a group having a structural formula of an aromatic ring with two hydrogen atoms removed, or a group having a structural formula in which two or more aromatic rings are bound via a single bond or a linking group with two hydrogen atoms removed, X is -CO-, -S-, or - SO₂-, Y is the same or different, and represents -S-, -SO₂-, -O-, -CO-, -COO-, or - CONH-, and n is an integer equal to or greater than 0;
the curing accelerator (B): one or more selected from the group consisting of: a reaction product of meta-xylylenediamine; a quaternary phosphonium salt; a phosphonium salt having a carboxy group; a 2-ethylhexanoate salt that is a thermally latent base generator and has a carboxy group; a secondary monoamine; an imidazole-based compound; and a low-molecular-weight maleimide.

The curing accelerator (B) preferably contains an organic nucleophile that is the quaternary phosphonium salt.

The curable composition preferably further contains a compound (C) having a hindered phenol structure containing a hydrazine skeleton.

The curing accelerator (B) is contained in the curable composition in a content proportion of from 0.1 to 2 mass%.

The curable composition is preferably capable of starting curing at 200°C or lower in the presence of oxygen.

The curable composition preferably cures to be used as an insulating film covering a conductor wire.

The present disclosure also provides an insulated wire including a conductor wire and an insulating film that covers the conductor wire, the insulating film being a cured product of the curable composition.

The present disclosure also provides a coil including the insulated wire.

The present disclosure also provides a motor including the coil.

The present disclosure also provides a generator including the coil.

The present disclosure also provides an electronic or electric device including the coil.

The present disclosure also provides a cable including the insulated wire.

The present disclosure also provides an electronic or electric device including the cable.

### Advantageous Effects of Invention

The curable composition of the present disclosure is excellent in solvent solubility and curable at a low temperature in the presence of oxygen. Thus, in terms of equipment for curing the curable composition and productivity, the curable composition has a wide range of applications, and can be used under various situations.

### Description of Embodiments

### Curable Composition

The curable composition of the present disclosure contains at least a compound represented by Formula (1) described later (which hereinafter may be referred to as "compound (A)") and a curing accelerator described later (which hereinafter may be referred to as "curing accelerator (B)"). One or more types of the compound (A) may be used and one or more types of the curing accelerator (B) may be used.

### (Compound (A))

The compound (A) is a compound represented by the following Formula (1).

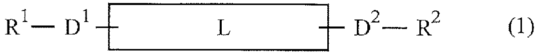

In Formula (1), R¹ and R² are the same or different, and each is a group represented by the following Formula (r-1).

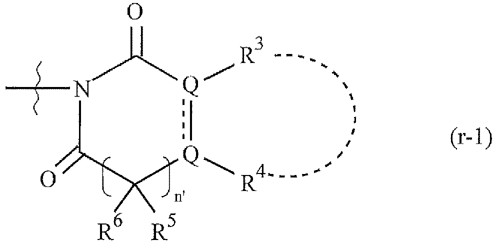

In Formula (r-1), Q represents C or CH, two Qs are bound via a single bond or a double bond, R³ to R⁶ are the same or different, and each is a hydrogen atom or a hydrocarbon group, R³ and R⁴ may be bound together to form a ring, n' is an integer equal to or greater than 0, and a bond with a wavy line in Formula (r-1) binds to D¹ or D².

In Formula (1), D¹ and D² are the same or different, and each represents a single bond or a linking group.

In Formula (1), L represents a divalent group having a repeating unit including a structure represented by the following Formula (I) and a structure represented by the following Formula (II).

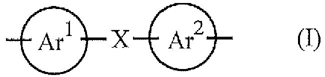

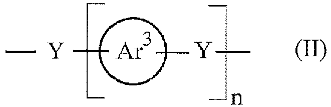

In Formulas (I) and (II), Ar¹ to Ar³ are the same or different, and each represents a group having a structural formula of an aromatic ring with two hydrogen atoms removed or a group having a structural formula of two or more aromatic rings bound via a single bond or a linking group with two hydrogen atoms removed. X represents -CO-, -S-, or -SO₂-, and Y represents -S-, -SO₂-, -O-, -CO-, -COO-, or - CONH-, and n represents an integer equal to or greater than 0.

Examples of the hydrocarbon group in R³ to R⁶ include a saturated or unsaturated aliphatic hydrocarbon group (preferably, an alkyl group having from 1 to 10 carbons, an alkenyl group having from 2 to 10 carbons, or an alkynyl group having from 2 to 10 carbons), an aromatic hydrocarbon group (preferably, an aryl group having from 6 to 10 carbons, such as a phenyl group or a naphthyl group), and a group in which two or more groups selected from the saturated or unsaturated aliphatic hydrocarbon group and the aromatic hydrocarbon group are bound.

R³ and R⁴ may be bound together to form a ring with an adjacent carbon atom. Examples of the ring include an alicyclic ring having from 3 to 20 carbons and an aromatic ring having from 6 to 14 carbons. Examples of the alicyclic ring having from 3 to 20 carbons include a cycloalkane ring having about from 3 to 20 members (preferably from 3 to 15 members, particularly preferably from 5 to 8 members) such as a cyclopropane ring, a cyclobutane ring, a cyclopentane ring, and a cyclohexane ring; a cycloalkene ring having about from 3 to 20 members (preferably from 3 to 15 members, particularly preferably from 5 to 8 members) such as a cyclopentene ring and a cyclohexene ring; and a bridged cyclic hydrocarbon group such as a perhydronaphthalene ring, a norbornane ring, a norbornene ring, an adamantane ring, a tricyclo[5.2.1.0^{2,6}] decane ring, and a tetracyclo[4.4.0.1^{2,5}.1^{7,10}] dodecane ring. Examples of the aromatic ring having from 6 to 14 carbons include a benzene ring and a naphthalene ring.

n' is an integer equal to or greater than 0, for example an integer from 0 to 3, preferably 0 or 1.

The group represented by Formula (r-1) is, in particular, preferably a group selected from groups represented by the following Formulas (r-1-1) to (r-1-6): 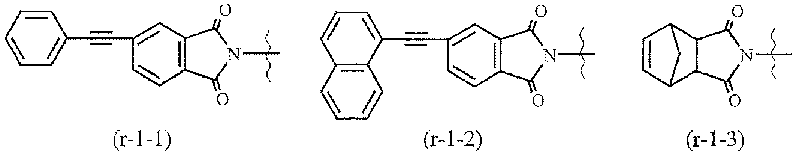 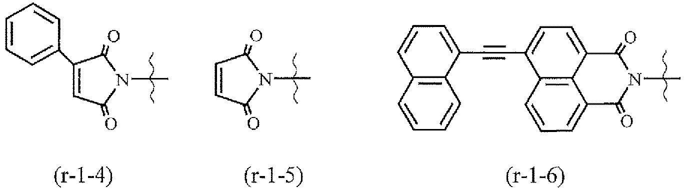 wherein a bond extending from the nitrogen atom in each of the formulas is bound to D¹ or D² in Formula (1).

One or more substituents may be bound to the groups represented by Formulas (r-1-1) to (r-1-6). Examples of the substituent include an alkyl group having from 1 to 6 carbons, an alkoxy group having from 1 to 6 carbons, and a halogen atom.

The group represented by Formula (r-1) is preferably a group selected from the groups represented by Formulas (r-1-1) to (r-1-5), and particularly preferably a group represented by Formula (r-1-1) or (r-1-5).

The group represented by Formula (r-1) is particularly preferably a group represented by the following Formula (r-1'): 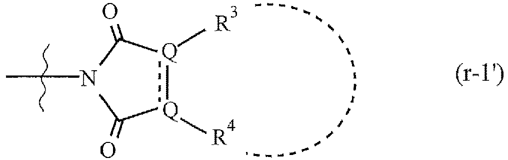 wherein Q, R³, and R⁴ are as defined above.

In Formula (1), D¹ and D² are the same or different, and each represents a single bond or a linking group. Examples of the linking group include a divalent hydrocarbon group, a divalent heterocyclic group, a carbonyl group, an ether bond, an ester bond, a carbonate bond, an amide bond, an imide bond, and a group in which a plurality of these groups are linked.

As D¹ and D², a group containing a divalent aromatic hydrocarbon group is preferable in that a cured product having particularly excellent heat resistance can be obtained, and an arylene group having from 6 to 14 carbons, such as a 1,4-phenylene group, a 1,3-phenylene group, a 4,4'-biphenylene group, a 3,3'-biphenylene group, a 2,6-naphthalenediyl group, a 2,7-naphthalenediyl group, a 1,8-naphthalenediyl group, and an anthracenediyl group, is particularly preferable.

As D¹ and D², a group selected from the groups represented by the following Formulas (d-1) to (d-4) is preferable, and in particular, a group represented by Formula (d-1) (a 1,2-phenylene group, a 1,3-phenylene group, or a 1,4-phenylene group) is preferable, and a 1,4-phenylene group is more preferable. The positions of bonding sites in the following formulas are not particularly limited.

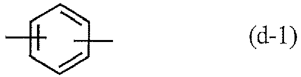

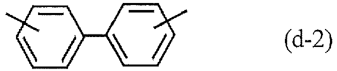

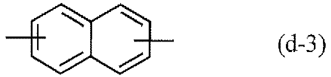

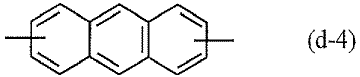

As D¹ and D², a group in which at least one group selected from the group consisting of a carbonyl group, an ether bond, an ester bond, a carbonate bond, an amide bond, and an imide bond is linked together with the divalent aromatic hydrocarbon group is preferable, and a group that is linked to the divalent aromatic hydrocarbon group via an ether bond is particularly preferable.

Thus, as the R¹-D¹- group and the R²-D²- group in Formula (1), a group represented by the following Formula (rd-1'-1) or (rd-1'-2) is preferable. The positions of bonding sites in the following formulas are not particularly limited. 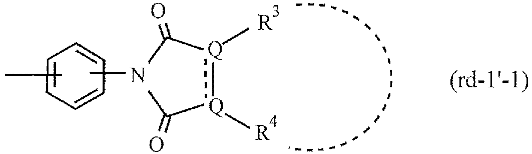 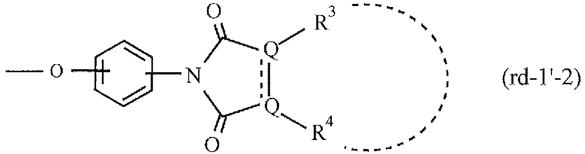 wherein Q, R³, and R⁴ are as defined above.

Ar¹ to Ar³ are the same or different, and each represents a group having a structural formula of an aromatic ring with two hydrogen atoms removed or a group having a structural formula of two or more aromatic rings bound via a single bond or a linking group with two hydrogen atoms removed.

Examples of the aromatic ring include an aromatic ring having from 6 to 14 carbons such as benzene, naphthalene, anthracene, or phenanthrene, among which, an aromatic hydrocarbon ring such as an aromatic ring having from 6 to 10 carbons such as benzene or naphthalene is preferable.

Examples of the linking group include a divalent hydrocarbon group having from 1 to 5 carbons and a group in which one or more hydrogen atoms of a divalent hydrocarbon group having from 1 to 5 carbons are substituted with a halogen atom.

Thus, Ar¹ to Ar³ are the same or different, and each is preferably a group having a structural formula of an aromatic ring having from 6 to 14 carbons with two hydrogen atoms removed or a group having a structural formula in which two or more aromatic ring having from 6 to 14 carbons are bound via: a single bond; a linear or branched alkylene group having from 1 to 5 carbons; or a group in which one or more hydrogen atoms of a linear or branched alkylene group having from 1 to 5 carbons are substituted with a halogen atom; with two hydrogen atoms removed.

Ar¹ to Ar³ are the same or different, and each is preferably a group selected from groups represented by the following Formulas (a-1) to (a-5). The positions of bonding sites in the following formulas are not particularly limited.

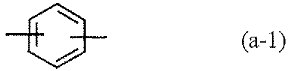

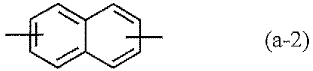

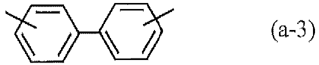

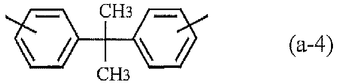

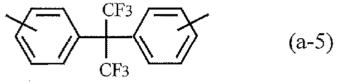

Among them, Ar¹ and Ar² in Formula (I) are preferably a group having a structural formula of an aromatic ring having from 6 to 14 carbons with two hydrogen atoms removed, and particularly preferably a group represented by Formula (a-1) or (a-2).

X in Formula (I) represents -CO-, -S-, or -SO₂-. X is preferably -CO- or -SO₂-.

Ar³ in Formula (II) is preferably a group selected from the groups represented by Formulas (a-1), (a-4), and (a-5).

Ys in Formula (II) are the same or different, and each represents -S-, -SO₂-, - O-, -CO-, -COO-, or -CONH-. Y is preferably -S-, -O-, or -SO₂-.

n in Formula (II) represents an integer equal to or greater than 0, and is, for example, an integer from 0 to 5, preferably an integer from 1 to 5, and particularly preferably an integer from 1 to 3.

L in Formula (1) is preferably a divalent group represented by the following Formula (L-1-1) or (L-1-2).

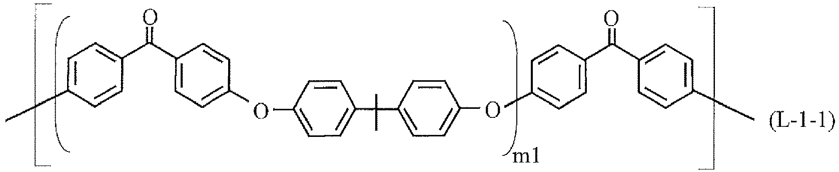

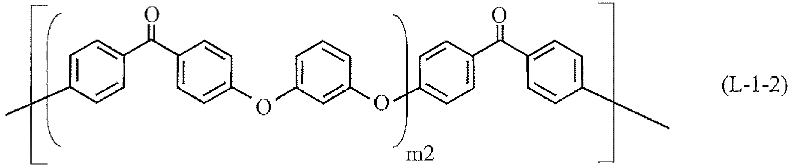

In the above formula, m1 and m2 are the number of repeating units represented in parentheses contained in the molecular chain (= the divalent group represented by Formula (L-1-1) or (L-1-2)), that is, an average degree of polymerization, and are, for example, from 2 to 50, preferably from 3 to 40, more preferably from 4 to 30, still more preferably from 5 to 20, and particularly preferably from 5 to 10. The values of m1 and m2 can be obtained by GPC measurement or NMR spectral analysis.

The number of moles of the group represented by Formula (r-1) per 1 g of the compound (A) (which hereinafter may be referred to as "functional group concentration") is, for example, from 0.5 × 10⁻⁴ to 20 × 10⁻⁴ mol/g. The upper limit value of the functional group concentration is preferably 15 × 10⁻⁴ mol/g, and particularly preferably 10 × 10⁻⁴ mol/g. The lower limit value of the functional group concentration is preferably 1.0 × 10⁻⁴ mol/g, and particularly preferably 1.5 × 10⁻⁴ mol/g. When the functional group concentration of the compound (A) is within the range described above, a cured product excellent in solvent solubility and excellent in toughness and heat resistance can be formed. On the other hand, when the functional group concentration is lower than the range described above, the solvent solubility tends to decrease. When the functional group concentration exceeds the range described above, it tends to be difficult to form a cured product excellent in toughness.

The functional group concentration is determined by measuring the area of each peak from the ¹H-NMR spectrum of the compound (A) and calculating the measured value in the following formula. Functional group concentration = [Peak area of a group represented by Formula (r-1)/Number of protons in the group represented by Formula (r-1)]/Σ[(Peak area of each group/Number of protons in the group corresponding to each peak) × Chemical formula weight corresponding to each peak]

The compound (A) has a number-average molecular weight (Mn; calibrated with standard polystyrene) of, for example, from 1000 to 15000, preferably from 1500 to 12000, more preferably from 2000 to 10000, still more preferably from 2200 to 8000, and particularly preferably from 2500 to 7500.

The compound (A) has a weight-average molecular weight of compound (A) (Mw; calibrated with standard polystyrene) of, for example, from 1000 to 45000. The lower limit value of the weight-average molecular weight (Mw) is preferably 1500, more preferably 2500, still more preferably 3000, and particularly preferably 4000. The upper limit value of the weight-average molecular weight (Mw) is preferably 40000, more preferably 35000, and still more preferably 25000.

The Mn and Mw are determined by gel permeation chromatography (GPC) measurement (solvent: chloroform, calibrated with standard polystyrene). The compound (A) having the molecular weight described above is excellent in solvent solubility.

The compound (A) is excellent in solvent solubility, and the solubility is preferably 1 g or more, more preferably 5 g or more, and particularly preferably 10 g or more at 23°C with respect to 100 g of a solvent.

The compound (A) is excellent in solvent solubility, and the solubility is 1 g or more, preferably 5 g or more, and particularly preferably 10 g or more at 23°C with respect to 100 g of a solvent.

The compound (A) is produced by, for example, reacting a compound represented by the following Formula (2): 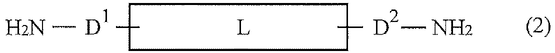
wherein D¹, D², and L are as defined above,
and a compound represented by the following Formula (3): 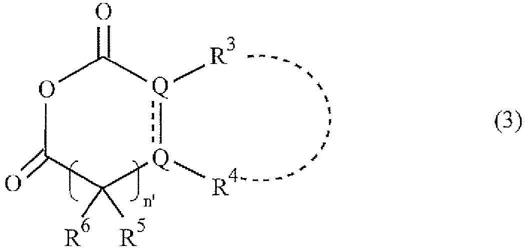
wherein Q and R³-R⁶ are as defined above.

Among the compounds represented by Formula (2), for example, a compound represented by the following Formula (2-1) can be produced through the following processes [1-1] and [1-2].

Process [1-1]: Obtaining a compound represented by the following Formula (6) by reacting a compound represented by the following Formula (4) and a compound represented by the following Formula (5) in the presence of a base.

Process [1-2]: Reacting the compound represented by Formula (6) with an amino alcohol (a compound represented by the following Formula (7)).

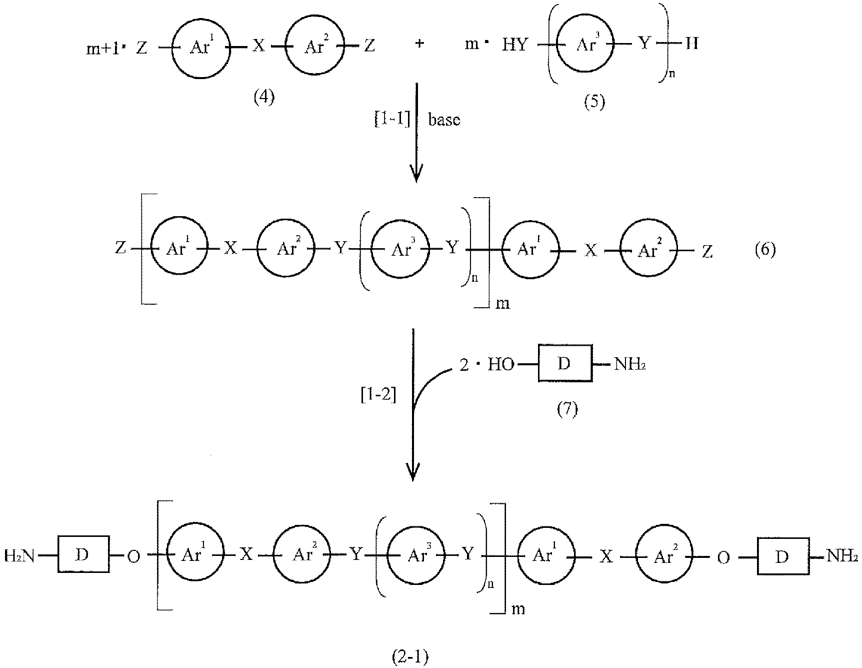

In the above formula, Ar¹ to Ar³, X, Y, and n are as defined above. D represents a linking group, and examples thereof include the same linking groups as those in D¹ and D². m is an average degree of polymerization of the repeating unit and is, for example, from 3 to 50, preferably from 4 to 30, and particularly preferably from 5 to 20. Z represents a halogen atom.

### (Process [1-1])

Examples of the compound represented by Formula (4) include a halide of a bisaryl compound such as benzophenone or 2-naphthylphenylketo, and a derivative thereof.

Examples of the compound represented by Formula (5) include hydroquinone, resorcinol, and bisphenol A.

Examples of the base include inorganic bases, such as sodium hydroxide, potassium hydroxide, calcium hydroxide, sodium carbonate, potassium carbonate, and sodium hydrogencarbonate; and organic bases, such as pyridine and triethylamine. The amount of the base to be used can be appropriately adjusted based on the type of the base. For example, the amount of diacidic base, such as calcium hydroxide, to be used is approximately from 1.0 to 2.0 mol with respect to 1 mol of the compound represented by Formula (5).

This reaction can be performed in the presence of a solvent. As the solvent, for example, an organic solvent, such as N-methyl-2-pyrrolidone, dimethylformamide or dimethyl sulfoxide, or a solvent mixture of two or more thereof may be used.

The reaction atmosphere is not particularly limited as long as it does not inhibit the reaction. For example, a nitrogen atmosphere, an argon atmosphere, or the like may be used. The reaction temperature is, for example, approximately from 100 to 200°C.

### (Process [1-2])

Examples of the compound represented by Formula (7) include 4-aminophenol, 2-amino-6-hydroxynaphthalene, and positional isomers and derivatives thereof.

This reaction can be performed in the presence of a solvent. As the solvent, the same solvent as that used in process [1] can be used. The reaction temperature is, for example, approximately from 100 to 200°C.

The content proportion of the compound (A) in the curable composition is preferably 10 mass% or more, more preferably 20 mass% or more, still more preferably 30 mass% or more with respect to 100 mass% of the total amount of the curable composition. The content proportion is, for example, 99 mass% or less, preferably 60 mass% or less, more preferably 50 mass% or less.

The content proportion of the compound (A) in the curable composition is preferably 40 mass% or more, more preferably 80 mass% or more, still more preferably 90 mass% or more, particularly preferably 95 mass% or more with respect to 100 mass% of the total solid content (for example, the total amount of each component excluding the solvent) in the curable composition. The content proportion of the compound (A) with respect to 100 mass% in total of the compound (A), the curing accelerator (B), and the compound (C) described later in the curable composition is preferably within the above range.

### (Curing Accelerator (B))

The curing accelerator (B) is one or more selected from the group consisting of: a reaction product of meta-xylylenediamine; a quaternary phosphonium salt; a phosphonium salt having a carboxy group; a 2-ethylhexanoate salt which is a thermally latent base generator and has a carboxy group; a secondary monoamine; an imidazole-based compound; and a low-molecular-weight maleimide.

The reaction product of meta-xylylenediamine is a reaction product of meta-xylylenediamine and another compound. Examples of the compound include a compound having a functional group reactive with an amino group. Examples of the functional group include a hydroxy group, a group containing a vinyl group, an epoxy group, and a halide group. Examples of the compound containing a vinyl group include styrene.

The reaction product of meta-xylylenediamine is preferably a compound represented by the following Formula (B-1).

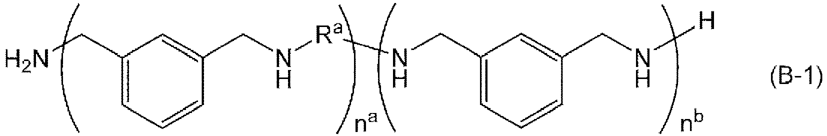

In Formula (B-1), R^{a} represents a divalent organic group, n^{a} represents an integer of 1 or more, and n^{b} represents 0 or 1.

Examples of the divalent organic group include a hydrocarbon group which may have a substituent. The hydrocarbon group may be saturated or unsaturated. Examples of the hydrocarbon group include a linear hydrocarbon group, a branched hydrocarbon group, an alicyclic hydrocarbon, an aromatic hydrocarbon, and a group in which two or more thereof are bound. The divalent organic group preferably has a number of carbons of from 1 to 10 and more preferably from 3 to 8.

Examples of the substituent include a halogen atom (fluorine atom, chlorine atom, bromine atom, iodine atom, or the like), a hydroxy group, a carboxy group, a nitro group, a cyano group, an isocyanate group, and an isothiocyanate group.

n^{a} represents an integer of 1 or more, and is preferably from 1 to 16, more preferably from 1 to 12.

Examples of the compound represented by Formula (B-1) include an adduct of meta-xylylenediamine and styrene (trade name "GASKAMINE 240" available from MITSUBISHI GAS CHEMICAL COMPANY, INC. or the like), an adduct of meta-xylylenediamine and epichlorohydrin (trade name "GASKAMINE 328" available from MITSUBISHI GAS CHEMICAL COMPANY, INC. or the like).

The quaternary phosphonium salt is a salt composed of a phosphonium cation and a counter anion. Examples of the quaternary phosphonium salt include known or commonly used compounds such as tetraphenylphosphonium tetra(p-tolyl) borate.

Among them, the quaternary phosphonium salt is preferably a compound represented by the following Formula (B-2).

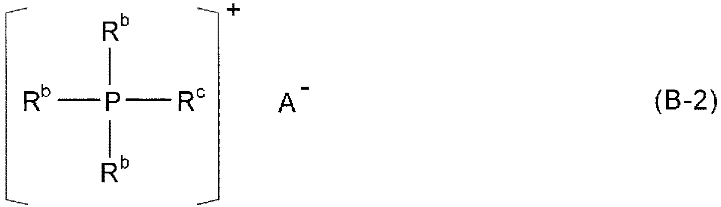

In Formula (B-2), R^{b} represents an alkyl group having from 1 to 10 carbons or an aryl group. Examples of the alkyl group having from 1 to 10 carbons include a linear or branched alkyl group having from 1 to 10 carbons such as a methyl group, an ethyl group, a propyl group, an isopropyl group, an n-butyl group, an isobutyl group, an s-butyl group, a t-butyl group, an n-pentyl group, an isopentyl group, an s-pentyl group, a t-pentyl group, a neopentyl group, an n-hexyl group, an isohexyl group, an s-hexyl group, a t-hexyl group, a neohexyl group, a heptyl group, an octyl group, a 2-ethylhexyl group, a nonyl group, or a decyl group; and a cyclic alkyl group having from 3 to 10 carbons (cycloalkyl group) such as a cyclopropyl group, a cyclobutyl group, a cyclopentyl group, a cyclohexyl group, or a methylcyclohexyl group. Examples of the aryl group include a phenyl group, a substituted phenyl group (for example, a tolyl group, a xylyl group, a mesityl group, an ethylphenyl group, a methoxyphenyl group, or an ethoxyphenyl group), and a naphthyl group. Among them, R^{b} is preferably an alkyl group having from 1 to 10 carbons, and more preferably an alkyl group having from 2 to 6 carbons.

In Formula (B-2), R^{c} represents an alkyl group having from 1 to 4 carbons. Examples of the alkyl group having from 1 to 4 carbons include a linear or branched alkyl group having from 1 to 4 carbons such as a methyl group, an ethyl group, a propyl group, an isopropyl group, a butyl group, an isobutyl group, an s-butyl group, or a t-butyl group. Among them, R^{c} is preferably a linear or branched alkyl group having from 1 to 3 carbons, and more preferably a methyl group or an ethyl group.

R^{b} and R^{c} are groups different from each other, and the number of carbons of R^{b} is preferably larger than the number of carbons of R^{c}.

In Formula (B-2), A⁻ represents a counter anion. As the counter anion, a known or commonly used counter anion can be used without particular limitations, and a conjugate base of an acidic phosphoric acid ester is preferable. Examples of the acidic phosphoric acid ester include a known or commonly used acidic phosphoric acid ester without particular limitations. Examples thereof include a phosphoric acid mono-ester (phosphoric acid monoalkyl ester or the like) and a phosphoric acid diester (phosphoric acid di-alkyl ester or the like). More specifically, the acidic phosphoric acid ester is preferably a group represented by the following Formula (B-2a).

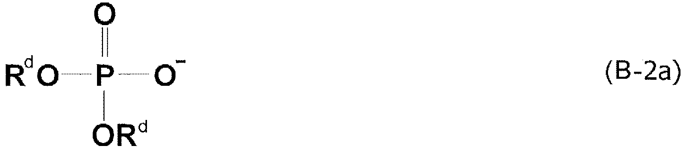

In Formula (B-2a), R^{d}s are the same or different and each represents an alkyl group having from 1 to 10 carbons or an aryl group. Specific examples of R^{d} include groups similar to those listed as R^{b}. Among them, R^{d} in Formula (B-2a) is preferably a linear or branched alkyl group having from 1 to 10 carbons, more preferably a linear or branched alkyl group having from 1 to 4 carbons, still more preferably a methyl group or an ethyl group.

The compound represented by Formula (B-2) can be produced by a known or commonly used production method, and can also be obtained by using, for example, a commercial product such as trade name "HISHICOLIN PX-4MP" (available from Nippon Chemical Industry Co., Ltd.).

The phosphonium salt having a carboxy group is a salt composed of a phosphonium cation and a counter anion, and the phosphonium cation and/or the counter anion has a carboxy group. In particular, the counter anion preferably has a carboxy group.

In particular, the phosphonium salt having a carboxy group is preferably a compound represented by the following Formula (B-3).

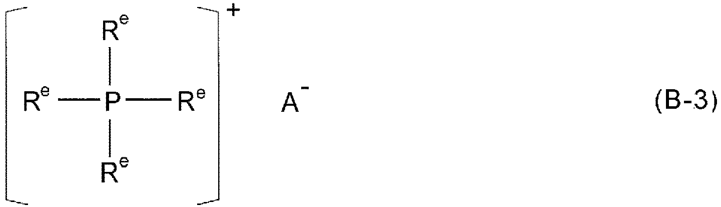

In Formula (B-3), R^{e}s are the same or different, and each represents a linear or branched alkyl group having from 1 to 16 carbons or a phenyl group optionally having a substituent on an aromatic ring. R^{e} is preferably a linear or branched alkyl group having from 1 to 4 carbons. The alkyl group is preferably a methyl group, an ethyl group, an n-propyl group, an isopropyl group, an n-butyl group, an s-butyl group, an isobutyl group, or a t-butyl group. The phenyl group optionally having a substituent is preferably a phenyl group or a p-tolyl group. In particular, all of R^{e}s are preferably linear or branched butyl groups.

In Formula (B-3), A⁻ represents a counter anion. As the counter anion, a known or commonly used counter anion can be used without particular limitations, and an anion having a carboxy group is preferable. The anion having a carboxy group is preferably an anion of a polycarboxylic acid. Examples of the polycarboxylic acid include an aliphatic polycarboxylic acid, an alicyclic polycarboxylic acid, and an aromatic polycarboxylic acid. Among them, an aliphatic polycarboxylic acid is preferable. The polycarboxylic acid may take the form of an acid anhydride.

The polycarboxylic acid has a number of carboxy groups, for example, from 2 to 6, preferably from 2 to 4, more preferably 2. The anion of the polycarboxylic acid is one in which the hydrogen atom of one or more carboxy groups among a plurality of carboxy groups of the polycarboxylic acid are removed to form a monovalent or higher valent (typically monovalent) carboxy anion.

The anion of the polycarboxylic acid is preferably a group represented by the following Formula (B-3a).

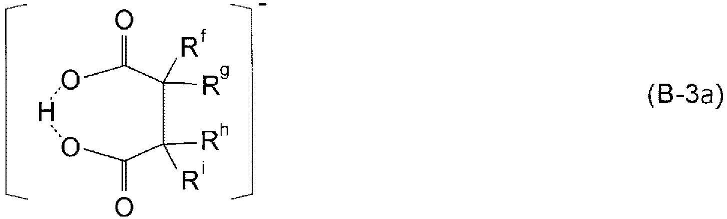

In Formula (B-3a), R^{f}, R^{g}, R^{h}, and Rⁱ are the same or different, and each represents a hydrogen atom, a hydroxy group, a carboxy group, or an organic group, and two or more of R^{f} to Rⁱ may bind together to form a ring. Examples of the organic group include a hydrocarbon group, which may have a substituent. Examples of the substituent include a halogen atom (fluorine atom, chlorine atom, bromine atom, iodine atom, or the like), a hydroxy group, a carboxy group, a nitro group, a cyano group, an isocyanate group, and an isothiocyanate group.

Specific examples of the aliphatic polycarboxylic acid capable of forming the group represented by Formula (B-3a) include succinic acid in which R^{f} to Rⁱ are all hydrogen atoms, malic acid in which R^{f} to R^{h} are hydrogen atoms, and Rⁱ is a hydroxy group, citric acid in which R^{f} and R^{g} are hydrogen atoms, R^{h} is a hydroxy group, and Rⁱ is a carboxylmethyl group, and butane-1,2,3,4-tetracarboxylic acid in which R^{f} and R^{h} are hydrogen atoms, and R^{g} and Rⁱ are carboxyl groups.

Examples of the alicyclic polycarboxylic acid capable of forming the group represented by Formula (B-3a) include a polycarboxylic acid having an alicyclic ring having, as constituent atoms, a carbon atom to which R^{f} and R^{g} are bound, and a carbon atom to which R^{h} and Rⁱ are bound.

Examples of the alicyclic polycarboxylic acid include a compound represented by the following Formula (B-3b) and a compound represented by the following Formula (B-3c).

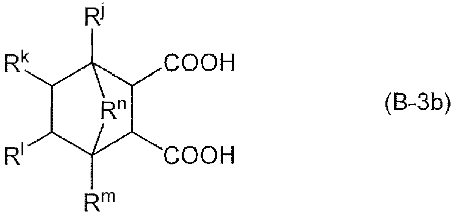

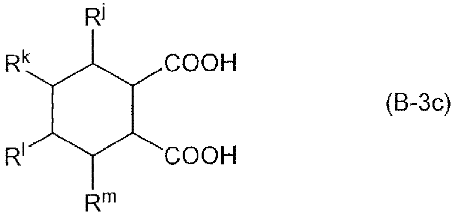

In Formula (B-3b) and Formula (B-3c), Rⁱ, R^{k}, R^{l}, and R^{m} are the same or different, and each represents a hydrogen atom, a hydroxy group, a carboxy group, or an organic group. Examples of the organic group include a hydrocarbon group, which may have a substituent. Examples of the substituent include a halogen atom (fluorine atom, chlorine atom, bromine atom, iodine atom, or the like), a hydroxy group, a carboxy group, a nitro group, a cyano group, an isocyanate group, and an isothiocyanate group. The hydrocarbon group is preferably a linear or branched alkyl group having from 1 to 4 carbon atoms. Rⁿ represents a divalent organic group, and is preferably a divalent hydrocarbon group, more preferably a divalent hydrocarbon group having from 1 to 4 carbons, and particularly preferably a methylene group or an ethylene group.

The compound represented by Formula (B-3b) is preferably a compound in which Rⁿ is a methylene group, and all of R^{j} to R^{m} are hydrogen atoms, or a compound in which Rⁿ is a methylene group, one of R^{j} to R^{m} is a methyl group, and the other three of R^{j} to R^{m} are hydrogen atoms.

As the compound represented by Formula (B-3c), a compound in which all of R^{j} to R^{m} are hydrogen atoms, a compound in which one of R^{j} to R^{m} is a methyl group and the other three of R^{j} to R^{m} are hydrogen atoms, and a compound in which two of R^{j} to R^{m} (in particular, R^{k} and R^{l}) are carboxy groups and the other two of R^{j} to R^{m} are hydrogen atoms are preferable. In Formula (B-3c), a compound in which all of R^{j} to R^{m} are hydrogen atoms, and a compound in which two of R^{j} to R^{m} (in particular, R^{k} and R^{l}) are carboxy groups and the other two of R^{j} to R^{m} are hydrogen atoms are more preferable.

Examples of the aromatic polycarboxylic acid include a compound represented by the following Formula (B-3d).

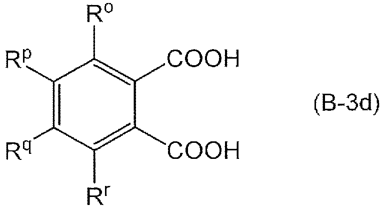

In Formula (B-3d), R^{o}, R^{p}, R^{q}, and R^{r} are the same or different, and each represents a hydrogen atom, a hydroxy group, a carboxy group, an amino group, an alkyl group, or an alkoxy group.

Specific examples of the compound represented by Formula (B-3d) include phthalic acid, 4-methylphthalic acid, 4-hydroxyphthalic acid, 4-aminophthalic acid, and 4-methoxyphthalic acid.

The quaternary phosphonium salt may be a compound corresponding to the phosphonium salt having a carboxy group, and the phosphonium salt having a carboxy group may be a compound corresponding to the quaternary phosphonium salt.

Among them, the quaternary phosphonium salt and the phosphonium salt having a carboxy group are particularly preferably a compound represented by Formula (B-2) or a compound represented by Formula (B-3), in which A⁻ is a conjugate base of the acidic phosphate or an anion of the polycarboxylic acid. In this case, compatibility with the solvent tends to be excellent.

As the 2-ethylhexanoate salt which is a thermally latent base generator and has a carboxy group, a salt composed of a 2-ethylhexanoate anion and an amidine cation is preferable.

Examples of the amidine capable of forming the amidine include a compound represented by the following Formula (B-4).

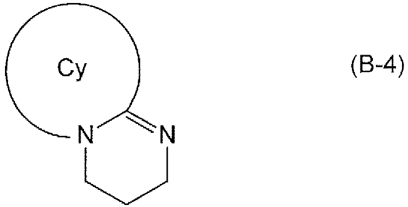

In Formula (B-4), Cy represents an alicyclic ring having one nitrogen atom and a carbon atom between two nitrogen atoms in Formula (B-4) as constituent atoms. In the alicyclic ring, a monovalent organic group may substitute a carbon atom constituting the alicyclic ring. The alicyclic ring is preferably a 4 to 8 membered ring, and more preferably a 5 to 7 membered ring.

Examples of the monovalent organic group include an alkyl group having from 1 to 6 carbons (methyl, ethyl, isopropyl, n-butyl, t-butyl, n-hexyl, or the like), a hydroxyalkyl group having from 1 to 6 carbons (hydroxymethyl, 2-hydroxyethyl, 2-hydroxypropyl, 2-hydroxyisopropyl, 3-hydroxy-t-butyl, 6-hydroxyhexyl, or the like), and a dialkylamino group having from 2 to 12 carbons (dimethylamino, methylethylamino, diethylamino, diisopropylamino, t-butylmethylamino, di-n-hexylamino, or the like).

Specific examples of the compound represented by Formula (B-4) include 1,5-diazabicyclo[4,3,0]-nonene-5 (DBN), 1,5-diazabicyclo[4,4,0]-decene-5, 1,8-diazabicyclo[5,4,0]-undecene-7, 5-hydroxypropyl-1,8-diazabicyclo[5,4,0]-undecene-7, and 5-dibutylamino-1,8-diazabicyclo[5,4,0]-undecene-7. Among them, DBN and 1,8-diazabicyclo[5,4,0]-undecene-7 are particularly preferable.

The activation temperature of the 2-ethylhexanoate salt, which is a thermally latent base generator and has a carboxy group, is preferably from 85 to 130°C, more preferably from 90 to 120°C, and still more preferably from 95 to 110°C.

The secondary monoamine is an amine having a secondary amino group as a single amino group in the molecule. The secondary monoamine is preferably a compound in which two hydrocarbon groups are bound to a nitrogen atom. Examples of the hydrocarbon group include a linear or branched hydrocarbon group. The hydrocarbon group is preferably an alkyl group having from 1 to 10 carbons, more preferably an alkyl group having from 2 to 4 carbons. The two hydrocarbon groups may be the same or different.

Specific examples of the secondary monoamine include N,N-dimethylamine, N,N-diethylamine, N,N-dipropylamine, N,N-dibutylamine, N,N-dipentylamine, N,N-dihexylamine, N,N-diheptylamine, N,N-dioctylamine, N,N-dinonylamine, N,N-didecylamine, N,N-diundecylamine, N,N-didodecylamine, N-methyl-N-propylamine, N-ethyl-N-propylamine, and N-propyl-N-butylamine.

Examples of the imidazole-based compound include a compound represented by the following Formula (B-5).

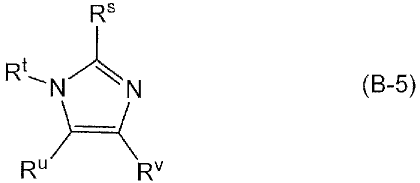

In Formula (B-5), R^{s}, R^{t}, R^{u}, and R^{v} are the same or different, and each represents a hydrogen atom or a hydrocarbon group optionally having a substituent. Examples of the substituent include a halogen atom (fluorine atom, chlorine atom, bromine atom, iodine atom, or the like), a hydroxy group, a carboxy group, a nitro group, a cyano group, an isocyanate group, and an isothiocyanate group.

Examples of the hydrocarbon group include an alkyl group having from 1 to 3 carbons, an aryl group having from 6 to 14 carbons, and a group in which two or more of these groups are bound.

Specific examples of the imidazole-based compound include 2-ethyl-4-methylimidazole, 2-methylimidazole, 1-benzyl-2-methylimidazole, and 1-cyanoethyl-2-methylimidazole.

Examples of the low-molecular-weight maleimide include a compound having 100 or less (preferably from 10 to 50) carbons. In particular, as the low-molecular-weight maleimide, a compound represented by the following Formula (B-6) is preferable.

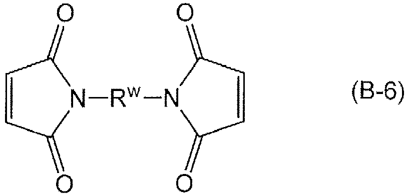

R^{W} in Formula (B-6) represents a linear or branched alkylene group, a cycloalkylene group, an arylene group, or a group in which two or more of these groups are bound via a single bond or a linking group.

The linking group is not particularly limited, and examples thereof include an ether bond (-O-), a thioether bond (-S-), a sulfonyl bond (-SO₂-), an amide bond (-NHCO-), an ester bond (-COO-), and an acyl bond (-CO-). The number of carbons in the linear or branched alkylene group is preferably from 1 to 12, and more preferably from 2 to 8. The number of carbons in the cycloalkylene group is preferably from 4 to 6. The arylene group preferably has 6 carbons (phenylene group).

Examples of the compound represented by Formula (B-6) include an aliphatic bismaleimide compound in which R^{w} is a linear or branched alkylene group. Examples of the aliphatic bismaleimide compound include 1,6-bismaleimide-(2,2,4-trimethyl)hexane, 1,6-bismaleimide-(2,4,4-trimethyl)hexane, N,N'-decamethylene bismaleimide, N,N'-decamethylene bismaleimide, N,N'-octamethylene bismaleimide, N,N'-heptamethylene bismaleimide, N,N'-hexamethylene bismaleimide, N,N'-pentamethylene bismaleimide, N,N'-tetramethylene bismaleimide, N,N'-trimethylene bismaleimide, N,N'-ethylene bismaleimide, N,N'-(oxydimethylene)bismaleimide, 1,13-bismaleimide-4,7,10-trioxatridecane, and 1,11-bis(maleimide)-3,6,9-trioxaundecane.

Examples of the compound represented by Formula (B-6) include an aromatic bismaleimide compound in which R^{w} contains the arylene group. The number of aromatic rings in the aromatic bismaleimide compound is not particularly limited.

Examples of the aromatic bismaleimide compound having one aromatic ring include 4-methyl-1,3-phenylene bismaleimide, 1,3-phenylene bismaleimide, 1,4-phenylene bismaleimide, 1,2-phenylene bismaleimide, naphthalene-1,5-disaleimide, and 4-chloro-1,3-phenylene bismaleimide.

Examples of the aromatic bismaleimide compound having two aromatic rings include 4,4'-diphenylmethane bismaleimide, N,N'-(4,4'-biphenylene)bismaleimide, N,N'-(sulfonyldi-p-phenylene)bismaleimide, N,N'-(oxydi-p-phenylene)bismaleimide, N,N'-(3,3'-dimethyl-4,4'-biphenylene)bismaleimide, N,N'-(benzylidenedi-p-phenylene)bismaleimide, 3,3'-dichloro-4,4'-diphenylmethane bismaleimide, 3,3'-dimethyl-4,4'-diphenylmethane bismaleimide, 3,3'-dimethoxy-4,4'-diphenylmethane bismaleimide, 4,4'-diphenylsulfide bismaleimide, 4,4'-diphenyl ether bismaleimide, 3,3'-benzophenone bismaleimide, 3,3'-dimethyl-5,5'-diethyl-4,4'-diphenylmethane bismaleimide, and 1,1'-[1,4-butanediylbis(oxy-p-phenylene)]bismaleimide.

Examples of the aromatic bismaleimide compound having three or more aromatic rings include 2,2-bis[4-(4-maleimidophenoxy)phenyl]propane, bis[4-maleimide(4-phenoxyphenyl)]sulfone, 1,1'-[1,4-phenylenebis(oxy-4,1-phenylene)]bismaleimide, 1,1'-[sulfonylbis(4,1-phenyleneoxy-3,1-phenylene)]bismaleimide, bis[4-(3-maleimidophenoxy)phenyl]ketone, 1,3-bis(4-maleimidophenoxy)benzene, 1,3-bis(3-maleimidophenoxy)benzene, 1,1'-[oxybis(4,1-phenylenethio-4,1-phenylene)]bismaleimide, and 1,1'-[(2,2',3,3',5,5',6,6'-octafluoro[1,1'-biphenyl]-4,4'-diyl)bis(oxy-3,1-phenylene)]bismaleimide.

Among them, the aromatic bismaleimide is preferably a compound represented by the following Formula (B-6a) from the viewpoint of being more excellent in compatibility with a solvent and more excellent in low-temperature curability.

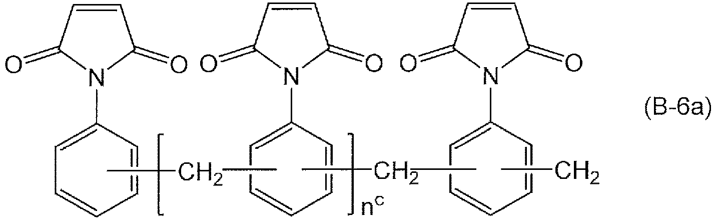

In Formula (B-6a), n^{c} represents an integer equal to or greater than 1, preferably an integer from 1 to 10, and more preferably an integer from 1 to 5. As the compound represented by Formula (B-6a), compounds having different values of n^{c} may be used, or compounds having a distribution of n^{c} values may be used.

The molecular weight of the low-molecular-weight maleimide is not particularly limited, but is preferably from 200 to 10000, more preferably from 200 to 8000, and still more preferably from 250 to 6000.

The melting point (Tm) of the low-molecular-weight maleimide is preferably 155°C or lower (for example, from 60 to 155°C), more preferably 150°C or lower, and still more preferably 145°C or lower. When the melting point is 155°C or lower, curing of the curable composition can be promoted at a lower temperature. The melting point indicates an endothermic peak temperature in DSC measurement.

The curing accelerator (B) is preferably an organic nucleophile. In particular, the curing accelerator (B) preferably contains an organic nucleophile which is the quaternary phosphonium salt.

The content proportion of the curing accelerator (B) in the curable composition is preferably from 0.03 to 30 mass%, more preferably from 0.07 to 10 mass%, still more preferably from 0.1 to 2 mass% with respect to 100 mass% of the total amount of the curable composition.

The content proportion of one or more selected from the group consisting of: the reaction product of meta-xylylenediamine; the quaternary phosphonium salt; the phosphonium salt having a carboxy group; the 2-ethylhexanoate salt which is a thermally latent base generator and has a carboxy group; the secondary monoamine; and the imidazole-based compound, in the curable composition is preferably from 0.03 to 10 mass%, more preferably from 0.07 to 5 mass%, still more preferably from 0.1 to 2 mass% with respect to 100 mass% of the total amount of the curable composition. The content proportion of the low-molecular-weight maleimide in the curable composition is preferably from 5 to 40 mass%, more preferably from 10 to 30 mass%, still more preferably from 15 to 25 mass% with respect to 100 mass% of the total amount of the curable composition.

The content of the curing accelerator (B) is preferably from 0.1 to 200 parts by mass, more preferably from 0.2 to 100 parts by mass, still more preferably from 1 to 50 parts by mass with respect to 100 parts by mass of the total amount of the compound (A).

The content of one or more selected from the group consisting of: the reaction product of meta-xylylenediamine; the quaternary phosphonium salt; the phosphonium salt having a carboxy group; the 2-ethylhexanoate salt which is a thermally latent base generator and has a carboxy group; the secondary monoamine; and the imidazole-based compound, is preferably from 0.1 to 10 parts by mass, more preferably from 0.2 to 7 parts by mass, still more preferably from 1 to 4 parts by mass with respect to 100 parts by mass of the total amount of the compound (A). The content of the low-molecular-weight maleimide in the curable composition is preferably from 50 to 200 parts by mass, more preferably from 70 to 150 parts by mass, still more preferably from 80 to 120 parts by mass with respect to 100 parts by mass of the total amount of the compound (A).

### (Compound (C))

The curable composition preferably further contains a compound having a hindered phenol structure containing a hydrazine skeleton (it may be referred to as "compound (C)"). The compound (C) is excellent in compatibility with a solvent and capable of forming a cured product having stable quality from the curable composition even when the curable composition is applied to a metal substrate such as copper. As the compound (C), one type may be used, or two or more thereof may be used.

Examples of the hindered phenol structure in the compound (C) include a structure having a bulky alkyl group such as a t-butyl group at the ortho position of the hydroxy group in the phenol skeleton.

The compound (C) is preferably a compound represented by the following Formula (C-1).

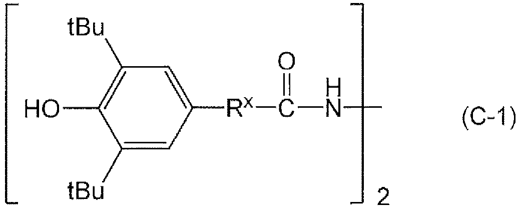

In Formula (C-1), R^{x} represents a divalent organic group, preferably a divalent hydrocarbon group, more preferably an alkylene group. The divalent organic group preferably has a number of carbons of from 1 to 6, more preferably from 1 to 4, still more preferably from 1 to 2.

The content proportion of the compound (C) in the curable composition is preferably from 0.1 to 10 mass%, more preferably from 0.2 to 5 mass% with respect to 100 mass% of the total amount of the curable composition.

The content of the compound (C) is preferably from 0.1 to 10 parts by mass, more preferably from 0.5 to 5 parts by mass, still more preferably from 1 to 3 parts by mass with respect to 100 parts by mass of the total amount of the compound (A).

### (Solvent)

The curable composition may contain a solvent. As the solvent, a known or commonly used organic solvent can be used without particular limitation. Examples thereof include chain ketones such as methyl ethyl ketone and methyl isobutyl ketone; cyclic ketones such as cyclopentanone and cyclohexanone; amides such as formamide, acetamide, N-methyl-2-pyrrolidone (NMP), N,N-dimethylformamide, and N,N-dimethylacetamide (DMAc); halogenated hydrocarbons such as methylene chloride, chloroform, 1,2-dichloroethane, chlorobenzene, bromobenzene, dichlorobenzene, benzotrifluoride, and hexafluoro-2-propanol; sulfoxides such as dimethyl sulfoxide (DMSO), diethyl sulfoxide, and benzyl phenyl sulfoxide; tetrahydrofuran (THF); aromatic hydrocarbons such as benzene, toluene, and xylene, ethers such as anisole; and a mixed solution of two or more thereof.

Among them, the solvent having a large difference between the exothermic onset temperature of the compound (A) and the boiling point of the solvent (= boiling point under normal pressure) is preferable from the viewpoint that the solvent can be easily volatilized while suppressing the progress of the curing reaction of the compound (A).

As the solvent, in particular, anisole is preferable from the viewpoint of excellent solubility of the compound (A) and the curing accelerator (B).

The curable composition may contain another component as necessary in addition to the above-described components. As the component, a known or commonly used additive can be used, and examples thereof include a curable compound other than the compound (A), a polymerization initiator, a catalyst, a filler, an organic resin (silicone resin, epoxy resin, fluororesin, or the like), a stabilizer (antioxidant other than the compound (C), ultraviolet absorber, light stabilizer, heat stabilizer, or the like), a flame retardant (phosphorus-based flame retardant, halogen-based flame retardant, inorganic flame retardant, or the like), a flame retardant aid, a reinforcing material, a nucleating agent, a coupling agent, a lubricant, a wax, a plasticizer, a release agent, an impact resistance improver, a hue improver, a fluidity improver, a colorant (dye, pigment, or the like), a dispersant, an antifoaming agent, a defoaming agent, an antibacterial agent, a preservative, a viscosity modifier, a thickener, a curing agent, a curing accelerator other than the curing accelerator (B), and a crosslinking agent. As the component, one type may be used, or two or more thereof may be used.

When a curable compound other than the compound (A) is contained, the proportion of the compound (A) to 100 mass% of the total amount of the curable compounds is preferably 60 mass% or more, more preferably 80 mass% or more, still more preferably 90 mass% or more. When a curing accelerator other than the curing accelerator (B) is contained, the proportion of the curing accelerator (B) to the total amount of 100 mass% of the curing accelerators is preferably 60 mass% or more, more preferably 80 mass% or more, still more preferably 90 mass% or more. When an antioxidant other than the compound (C) is contained, the proportion of the compound (C) to 100 mass% of the total amount of the antioxidant is preferably 60 mass% or more, more preferably 80 mass% or more, still more preferably 90 mass% or more.

Examples of the polymerization initiator include a radical polymerization initiator. Examples of the radical polymerization initiator include a photoradical polymerization initiator and a thermal radical polymerization initiator.

Examples of the photoradical polymerization initiator include benzophenone, acetophenone benzyl, benzyldimethyl ketone, benzoin, benzoin methyl ether, benzoin ethyl ether, benzoin isopropyl ether, dimethoxyacetophenone, dimethoxy phenylacetophenone, diethoxyacetophenone, diphenyl disulfite, methyl o-benzoylbenzoate, ethyl 4-dimethylaminobenzoate,
2,4-diethylthioxanthone, 2-methyl-1-[4-(methyl)phenyl]-2-morpholinopropanone-1,1-hydroxycyclohexylphenyl ketone, a 2-amino-2-benzoyl-1-phenyl alkane compound such as 2-dimethylamino-2-(4-morpholino)benzoyl-1-phenylpropane, tetra(t-butylperoxy carbonyl)benzophenone, benzil, 2-hydroxy-2-methyl-1-phenyl-propan-1-one, an amino benzene derivative such as 4,4'-bis(diethylamino)benzophenone, an imidazole compound such as 2,2'-bis (2-chlorophenyl)-4,5,4',5'-tetraphenyl-1,2'-biimidazole, a halomethylated triazine compound such as 2,6-bis(trichloromethyl)-4-(4-methoxynaphthalen-1-yl)-1,3,5-triazine, and a halomethyl oxadiazole compound such as 2-trichloromethyl-5-(2-benzofuran-2-yl-ethenyl)-1,3,4-oxadiazole. A photosensitizer can be added as necessary.

Examples of the thermal radical polymerization initiator include an azo compound such as azobisisobutyronitrile and organic peroxides. Examples of the organic peroxides include hydroperoxide, dialkyl peroxide, peroxy ester, diacyl peroxide, peroxy dicarbonate, peroxy ketal, and ketone peroxide (specifically, benzoyl peroxide, t-butylperoxy-2-ethylhexanoate, 2,5-dimethyl-2,5-di(2-ethylhexanoyl)peroxyhexane, t-butylperoxy benzoate, t-butyl peroxide, cumene hydroperoxide, dicumyl peroxide, di-t-butyl peroxide, 2,5-dimethyl-2,5-dibutyl peroxyhexane, 2,4-dichlorobenzoyl peroxide, 1,4-di(2-t-butylperoxyisopropyl)benzene, 1,1-bis(t-butylperoxy)-3,3,5-trimethylcyclohexane, methylethylketone peroxide, and 1,1,3,3-tetramethylbutyl peroxy-2-ethylhexanoate).

The curable composition can cure at a low temperature even when a polymerization initiator is not used. Thus, the content of the polymerization initiator in the curable composition may be 2 parts by mass or less, and may be 1 part by mass or less, 0.5 parts by mass or less, 0.1 parts by mass or less, or 0.02 parts by mass or less with respect to 100 parts by mass of the total amount of the compound (A).

The curable composition preferably has no precipitate or insoluble substance at 60°C. It is particularly preferable that there is no precipitate or insoluble substance at normal temperature (for example, 25°C).

The curable composition is preferably capable of starting curing at 300°C or lower (preferably 250°C or lower, more preferably 200°C or lower) in the presence of oxygen. That is, the exothermic onset temperature is preferably within the above range.

The curable composition is excellent in solvent solubility and curable at a low temperature in the presence of oxygen. Thus, the application range is wide in terms of equipment for curing the curable composition and productivity, and the curable composition can be used under various situations. In addition, even when the curable composition is cured by being brought into contact with a metal substrate such as copper, the quality (dielectric constant, glass transition temperature, flexibility, adhesion, and the like) of the cured product is less likely to be unstable. Thus, the curable composition is not limited to the type of substrate to be applied, and can be applied to various types of substrates.

The curable composition can be prepared by mixing the above-described components, and heating and stirring the mixture at, for example, a temperature of 80°C or lower, preferably room temperature (from approximately 25°C to 80°C), and particularly preferably from 50 to 70°C.

When the curable composition is heated, the compounds (A) react with each other and cure to form a cured product. The curable composition may be dried to volatilize the solvent before heating. The heating can be performed under normal pressure, under reduced pressure, or under pressurization. The heating may be performed under an inert gas atmosphere such as nitrogen or argon, but since the curable composition is sufficiently cured even in the presence of oxygen, it is preferable to perform the heating under an air atmosphere such as in the presence of oxygen.

Heating temperature is not particularly limited, but is preferably 300°C or lower (for example, from 60 to 300°C), more preferably 250°C or lower (for example, from 80 to 250°C), still more preferably 200°C or lower (for example, from 100 to 200°C) from the viewpoint that the curable composition can cure at a low temperature. The heating may be performed in a state where the temperature is kept constant, or the temperature may be changed stepwise. The heating temperature can be appropriately adjusted according to heating time. The heating means is not particularly limited, and a known or commonly used means can be used.

Further, the curing reaction of the curable composition can be stopped midway to form a semi-cured product (stage B). The semi-cured product temporarily exhibits fluidity when heated and can conform to a step of a substrate having the step. Further, a cured product having super heat resistance, flame retardancy, and good dielectric properties can be formed by further heating the semi-cured product.

The degree of cure of the semi-cured product is, for example, 85% or less (for example, from 10 to 85%, particularly preferably from 15 to 75%, more preferably from 20 to 70%).

The degree of cure of the semi-cured product can be calculated from the following formula by measuring the calorific value of the (uncured) curable composition before curing and the calorific value of the semi-cured product by DSC. Degree of cure (%) = [1 - (calorific value of semi-cured product/calorific value of uncured curable composition)] × 100

The cured product of the curable composition is excellent in heat resistance, and the 5% weight loss temperature (T_{d5}) measured at a heating rate of 10°C/min (in nitrogen) is, for example, 300°C or higher, preferably 400°C or higher, more preferably 430°C or higher, still more preferably 450°C or higher. The upper limit of the 5% weight loss temperature (T_{d5}) is, for example, 600°C, preferably 550°C, particularly preferably 530°C. The 5% weight loss temperature can be measured by TG/DTA (simultaneous measurement of differential heat and thermogravimetry).

Thus, the curable composition can be molded by a well-known molding method, and then (drying is performed as necessary, then) heated to produce a molded body composed of a cured product or a semi-cured product of the curable composition.

The curable composition can be suitably used as a molding material such as a composite material (such as fiber-reinforced plastics and prepregs) to be used in a severe environmental temperature, such as those for electronic information devices, home appliances, automobiles, precision machines, aircraft, devices for the space industry, and energy field (oil drill pipes/tubes and fuel containers), and as a functional material, such as a shielding material, a conducting material (such as a thermally conducting material), an insulating material, and an adhesive (such as a heat-resistant adhesive). In addition, the curable composition can be suitably used as a sealing agent, a paint, an ink, a sealant, a resist, a shaping material, and a forming material [such as an automobile component, including a thrust washer, an oil filter, a seal, a bearing, a gear, a cylinder head cover, a bearing retainer, an intake manifold, and a pedal; a component of a semiconductor and liquid crystal producing apparatus, including a base material, an electrical insulation material (such as an electrical insulation film), a laminated plate, electronic paper, a touch screen, a solar cell substrate, an optical waveguide, a light guide plate, holographic memory, a silicon wafer carrier, an IC chip tray, an electrolytic capacitor tray, and an insulating film; an optical component, such as a lens; a compressor component, such as a pump, a valve, and a seal; a cabin interior component of aircraft; a medical instrument component and a component of a food and beverage producing facility, such as a sterilized instrument, a column, and piping; and a member for a electric and electronic device as represented by a housing for use in a personal computer and a cell phone, and a keyboard supporter, which are members for supporting a keyboard inside a personal computer].

### Cured product

The curable composition can be molded and as necessary, dried, and a desired shape can be imparted to the solidified product of the curable composition (preferably the solidified material of the compound (A)), and a molded body formed from the solidified material can be produced. The molded body formed from the solidified product temporarily exhibits fluidity or adhesive properties when heated, and thus secondary molding or adhesion with another member becomes possible. When the solidified product having a desired shape is heated, a molded body formed from a cured product or semi-cured product of the curable composition (preferably a cured product or a semi-cured product of the compound (A)) is obtained. The shape of the molded body is not particularly limited, and the shape depending on the application can be appropriately selected.

### [Insulated Wire]

The curable composition is particularly preferably used as an insulating film covering a conductor wire after curing. As a result, an insulated wire including a conductor wire and an insulating film covering the conductor wire can be obtained.

The insulating film contains a cured product of the curable composition. The proportion of the cured product of the compound (A) in the total amount of the insulating film is, for example, 50 wt.% or more, preferably 60 wt.% or more, further preferably 70 wt.% or more, further preferably 80 wt.% or more, further preferably 90 wt.% or more, particularly preferably 95 wt.% or more. The upper limit of the proportion is 100 wt.%. That is, the insulating film may be made only of a cured product of the compound (A).

The insulating film is obtained, for example, by applying the curable composition to the surface of the conductor wire and firing the obtained coating film.

As a method for applying the curable composition to the conductor wire, a known or commonly used application method can be used, and examples thereof include a dip coating method. The dip coating method is a method of forming a coating film by immersing a conductor wire in the curable composition to attach the curable composition to the surface of the conductor wire.

When the curable composition is applied to the conductor wire, the temperature of the curable composition is preferably maintained at a temperature lower than the exothermic onset temperature of the compound (A). Since the curing reaction of the compound (A) does not proceed at the above temperature, the curable composition can be applied to the conductor wire while suppressing the thickening of the curable composition, and a coating film having a uniform thickness can be formed.

The application of the curable composition to the conductor wire can be repeated a plurality of times until the thickness of the coating film reaches a desired thickness. The compound (A) does not generate water upon curing. Thus, even when the coating film is stacked to a desired thickness and then fired, water-induced voids and pinholes do not occur. In addition, when firing is performed after stacking the coating film, the number of times of firing can be reduced, which leads to power saving and energy saving. After the application of the curable composition, the coating film is preferably dried before the next application. The coating film can be dried, for example, by heating at a temperature higher than room temperature and lower than the exothermic onset temperature of the compound (A).

The dried coating film is fired, specifically, heated and fired at a temperature equal to or higher than the exothermic onset temperature of the compound (A), whereby curing of the compound (A) can be initiated, and an insulating film containing a cured product of the compound (A) can be formed.

The conductor wire is a wiring formed of a material having conductivity. Examples of the material having conductivity include copper, a copper alloy, aluminum, an aluminum alloy, and stainless steel. Among them, copper is preferable from the viewpoint of obtaining high conductivity. Thus, a copper wire is preferable as the conductor wire. The conductor wire may have a plating layer (for example, a tin plating layer) for suppressing corrosion on its surface.

The diameter of the conductor wire is, for example, from 0.5 to 2.0 mm. The transverse sectional shape of the conductor wire is not particularly limited, and can be appropriately selected according to the application. Examples thereof include a circular shape, a rectangular shape, and a square shape.

The relative permittivity of the cured product (or the insulating film) at 10 GHz is, for example, 2.70 or less, preferably 2.65 or less, more preferably 2.60 or less. The lower limit value of the relative permittivity is, for example, 2.20. When the relative permittivity is within the above range, the insulating film has excellent insulating properties.

Since the insulating film is excellent in insulating properties, a sufficient insulating function can be exhibited even when the insulating film is thin (for example, even when the thickness is 30 µm or less). The lower limit value of the thickness of the insulating film is, for example, 10 µm.

### [Coil]

A coil can be obtained using the insulated wire. The coil includes the insulated wire. More specifically, the coil has a configuration in which the insulated wire is wound. The coil is suitably used in an electronic or electric device (for example, a device including a conversion device between electric energy and mechanical energy, such as a motor (for example, a motor of a hybrid vehicle or an electric vehicle) or a generator).

The insulating film included in the insulated wire is excellent in insulating properties and capable of ensuring high insulation even when the insulating film is thinned. Thus, by thinning the insulating film in the coil, a reduction in size and weight can be achieved while maintaining insulating properties. In addition, in the insulated wire, adhesion between the insulating film and the conductor wire is high, and the insulating film and the conductor wire are not peeled off when a load is applied at the time of coil winding. Thus, the coil including the insulated wire has high reliability in electrical properties.

### [Cable]

A cable can be obtained using the insulated wire. The cable includes the insulated wire. More specifically, the cable has a configuration in which one or a plurality of the insulated wires are bundled, and a protective outer covering (= sheath) is applied to the surface of the cable. The cable can be suitably used as a connection component of an electronic or electric device (for example, a cord of a charger of a smartphone or the like, a LAN cable of an electronic device, a cord of a home appliance, or the like).

The insulating film included in the insulated wire is excellent in insulating properties and capable of ensuring high insulation even when the insulating film is thinned. Thus, by thinning the insulating film in the cable, a reduction in size and weight can be achieved while maintaining insulating properties. In addition, since the insulated wire has high adhesion between the insulating film and the conductor wire, the cable has high reliability in electrical properties.

Further, an electronic or electric device including the cable also has high reliability in electrical properties. The electronic or electric device is, for example, a device including a connection component such as a cord or a LAN cable, and examples thereof include a charger such or a smartphone or the like, an electronic device such as a smartphone including the charger, and a home appliance.

Each embodiment disclosed in the present specification can be combined with any other feature disclosed in the present specification. The configurations, combinations thereof, and the like in each embodiment are exemplary, and additions, omissions, replacements, and other changes of the configurations can be appropriately made without departing from the spirit of the present disclosure. In addition, each of the inventions according to the present disclosure is not limited by the embodiments or the following examples but is limited only by the claims.

### Examples

Hereinafter, an embodiment of the present disclosure will be described in more detail based on examples, but the present disclosure is not limited to these examples.

### Preparation Example 1 (Preparation of Compound (1 -1))

### (Process 1-1)

A reactor equipped with a stirrer, a nitrogen inlet tube, and a Dean-Stark apparatus was charged with 37.25 g of 4,4'-difluorobenzophenone, 32.48 g of bisphenol A, 29.50 g of anhydrous potassium carbonate, 214.4 g of N-methylpyrrolidone, and 90.4 g of toluene, then the mixture was heated with stirring under a nitrogen atmosphere, and toluene was refluxed at 130 to 140°C for 4 hours. Thereafter, the mixture was further heated to distill off toluene at 170 to 180°C. Further, stirring was continued at 170 to 180°C for 10 hours, after which the temperature was returned to room temperature.

### (Process 1-2)

Thereafter, 6.520 g of 4-aminophenol, 8.260 g of anhydrous potassium carbonate, 27.9 g of N-methylpyrrolidone, and 117.4 g of toluene were added to the reactor containing the reaction product, and heated again under a nitrogen atmosphere while stirring, and toluene was refluxed at 130 to 140 °C for 3 hours. Thereafter, heating was performed to distill off the toluene at 170 to 180°C, and stirring was further continued for 4 hours while the above temperature was maintained. The mixture was then cooled to room temperature, and the reaction liquid was added to 3000 mL of methanol and filtered, whereby a powdery solid was obtained. This powdery solid was repeatedly washed with methanol and water, and then dried overnight at 80°C under reduced pressure, whereby a powdery solid of diamine-1 (a compound represented by the following formula) was obtained.

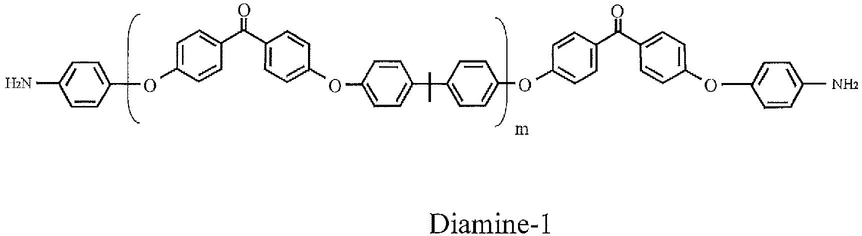

### Process (2)

A reactor provided with a stirrer, a nitrogen inlet tube, and Dean-Stark apparatus was charged with 49.70 g of the diamine-1 obtained in process 1-2, 6.03 g of maleic acid anhydride, 316.0 g of N-methylpyrrolidone, and 178.3 g of toluene, and the mixture was stirred in a nitrogen atmosphere at room temperature for 5 hours. Thereafter, 1.086 g of p-toluenesulfonic acid was added as a catalyst, and the temperature was increased to 140°C, after which stirring was continued for 8 hours, toluene was refluxed, and moisture was removed. The temperature of the reaction liquid was brought back to room temperature, and then the reaction liquid was added to 3000 mL of methanol, whereby a powdery solid was obtained. This powdery solid was repeatedly washed with methanol and water and then dried overnight at 80°C under reduced pressure, whereby 48.8 g of the compound (1-1) (a compound represented by the following Formula (1-1)) was obtained.

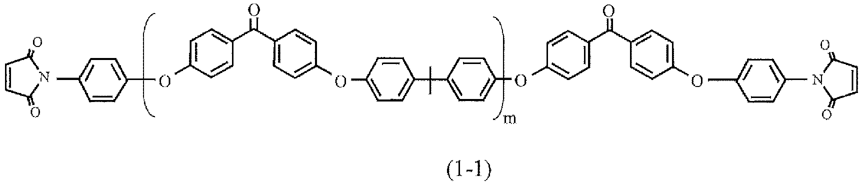

For the obtained compound (1-1), the functional group concentration was calculated from the integrated intensity ratio of signals of ¹H-NMR spectrum. In addition, the number-average molecular weight and the weight-average molecular weight were determined by GPC measurement. Further, the exothermic onset temperature was determined by DSC measurement, and the 5% thermal weight loss temperature (T_{d5}) was determined by TGA measurement. As a result, the functional group concentration was 587.3 µmol/g, the number-average molecular weight was 3500, the weight-average molecular weight was 5900, the exothermic onset temperature was 268°C, and T_{d5} was 515°C.

The measurement was performed under the following conditions.
<NMR Measurement >
   Measurement device: JEOL ECA500 or BRUKER AVANCE 600 MHz
   Measurement solvent: deuterated DMSO, deuterated chloroform, or a liquid mixture of deuterated chloroform/pentafluorophenol (PFP) = 2/1 (wt/wt)
   Chemical shift: TMS as the reference
<GPC Measurement >
   Device: Pump "LC-20AD" (available from Shimadzu Corporation)
   Detector: RID-10A (available from Shimadzu Corporation) or Model 302 TDA (available from Viscotek Corporation), and UV 2501 (available from Viscotek Corporation)
   Solvent: THF or chloroform
   Column: (Shodex KF-803) × 1, (Shodex KF802) × 1, and (Shodex KF801) × 2
   Flow rate: 1.0 mL/min
   Temperature: 40°C
   Sample concentration: 0.1% (wt/vol)
   Calibrated with standard polystyrene
<DSC Measurement>
   Device: DSC 6200 (available from Seiko Instruments Inc.)
   Heating rate: 10°C/min
   Atmosphere: nitrogen atmosphere
<TGA Measurement>
   Device: TG/DTA 6200 (available from Seiko Instruments Inc.)
   Heating ratee: 10°C/min
   Atmosphere: nitrogen atmosphere
<DMA Measurement >
   Device: DMA 7100 (available from Hitachi High-Tech Science Corporation)
   Heating rate: 5°C/min
   Measurement frequency: 1 Hz

### Examples and Comparative Examples

The compound (1-1) obtained in Preparation Example 1, anisole as a solvent, and the components (organic nucleophiles, antioxidants, and the like) listed in each table were mixed in the blending amounts listed in each table, and the mixture was stirred for 1.5 hours to prepare a curable composition of each example. Mixing and stirring were first performed at room temperature, and when there was a partially undissolved residue or a precipitate in each component, the mixing and stirring were performed at 60°C.

### <Evaluation>

The curable compositions produced in Examples and Comparative Examples were evaluated as follows.

### (1) Anisole Compatibility

The anisole compatibility at the time of the preparation of the curable composition was evaluated according to the following evaluation criteria. The results are shown in the table.

### [Evaluation Criteria]

∘: Each component was completely dissolved by stirring at room temperature.
△: After heating and stirring at 60°C, there were undissolved residues or precipitates.
×: Hardly dissolved or dispersed after heating and stirring at 60°C.

### (2) Exothermic Onset Temperature

The exothermic onset temperature of the curable composition was measured by DSC measurement after removing the solvent. Then, the exothermic onset temperature was evaluated according to the following evaluation criteria. The results are shown in the table. Some of the examples in which the evaluation of the anisole compatibility was inferior were not evaluated and indicated by "-" in the table.

### [Evaluation Criteria]

⊚: Exothermic onset was observed at 200°C or lower, and complete curing was observed.
∘: Exothermic onset was observed at a temperature higher than 200°C and 250°C or lower, and complete curing was observed.
Δ: Exothermic onset was observed at a temperature higher than 250° C and 300°C or lower, and complete curing was observed.
×1: No exothermic onset was observed at 300°C or lower.
×2: The reaction was deactivated after exothermic onset.

### (3) Curing Property

The curable composition was applied onto a substrate using an applicator to have a thickness of 40 µm after curing to form a coating film. As the substrate, a glass plate (commercially available float glass, thickness 4 mm), an aluminum foil (trade name: "Aluminum Tough Sheet", 200 square, available from AS ONE Corporation), or a copper plate (commercially available oxygen-free copper, thickness 1 mm) was used. Then, the substrate on which the coating film had been formed was stored at 250°C, and a cured product was formed by solvent removing and curing. The type of the substrate used, the curing time, and the curing atmosphere are as listed in Table 4.

### (4) Glass Transition Temperature and Residual Heat

The cured product formed in the evaluation of curing property was isolated from the substrate and subjected to DMA measurement (dynamic viscoelasticity measurement) or DSC (differential scanning calorimeter) measurement. The cured product on the film was subjected to DMA measurement, and the cured product on the copper plate was subjected to DSC measurement.

The DMA measurement was performed using a solid viscoelasticity measuring device (product name "DMA 7100", available from Hitachi High-Tech Science Corporation) under conditions of a heating rate of 5°C/min, a measurement temperature range from 25 to 400°C, a deformation mode: tension, and a frequency of 1 Hz in an air atmosphere. DSC measurement was performed using a differential scanning calorimeter (trade name "DSC 6200", available from Seiko Instruments Inc.) under conditions of a heating rate of 10°C/min and a measurement temperature range from 30 to 400°C under a nitrogen stream. The temperature at the inflection point of the obtained temperature-thermal history change curve was defined as the glass transition temperature, and heat generation in the range from the glass transition temperature to 400°C was defined as residual heat generation. The glass transition temperature and residual heat generation were evaluated according to the following evaluation criteria. The results are shown in the table.

### [Evaluation Criteria of Glass Transition Temperature]

∘: 160°C or higher
×: Lower than 160°C

### [Evaluation Criteria of Residual Heat Generation]

∘: Less than 5 mJ/mg
×: 5 mJ/mg or more

### [Table 1]

**(Table 1)**

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Compound (A) | Compound (1-1) | 40 | 40 | 40 | 40 | 40 | 40 | 40 | 40 | 40 | 40 | 40 | 20 |
| Solvent | Anisole | 60 | 60 | 60 | 60 | 60 | 60 | 60 | 60 | 60 | 60 | 60 | 60 |
| Organic nucleophile | GASKAMINE 240 | 1 | | | | | 1 | | | | | | |
| | PX-4MP | | 1 | | | | | | | 0.1 | | | |
| | TBP-3 S | | | 1 | | | | | | | | | |
| | U-CAT SA-102 | | | | 1 | 1 | | | | | | | |
| | GASKAMINE 328 | | | | | | | 1 | | | | | |
| | Dibutylamine | | | | | | | | 1 | | | | |
| | 2E4MZ | | | | | | | | | | 1 | | |
| | 1B2MZ | | | | | | | | | | | 1 | |
| Maleimide | BMI-2300 | | | | | | | | | | | | 20 |
| Metal deactivator/ | Irganox MD 1024 | | 0.5 | 1 | | | 0.5 | | | | | | |
| Antioxidant | CDA-10 | | | | | 0.5 | | | | | | | |
| Evaluation | Anisole compatibility | ○ | ○ | ○ | ○ | ○ | ○ | ○ | ○ | ○ | ○ | ○ | ○ |
| | Exothermic onset temperature (°C) | ⊚ | ⊚ | ⊚ | ○ | ○ | ⊚ | ⊚ | ○ | ⊚ | ⊚ | ⊚ | ○ |

### [Table 2]

**(Table 2)**

| | | Comparative Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Compound (A) | Compound (1-1) | 40 | 40 | 40 | 40 | 40 | 40 | 40 | 40 | 40 | 40 | 40 | 40 | 40 | 40 |
| Solvent | Anisole | 60 | 60 | 60 | 60 | 60 | 60 | 60 | 60 | 60 | 60 | 60 | 60 | 60 | 60 |
| Radical initiator | PERCUMYL D | 1 | | | | | | | | | | | | | |
| | Perbutyl Z | | 1 | | | | | | | | | | | | |
| | PERHEXA HC | | | 1 | | | | | | | | | | | |
| Organic nucleophile | U-CAT 3512T | | | | 1 | | | | | | | | | | |
| | U-CAT 3513N | | | | | 1 | | | | | | | | | |
| | U-CAT SA-1 | | | | | | 2 | | | | | | | | |
| | Triethylamine | | | | | | | 1 | | | | | | | |
| | DMAc | | | | | | | | 1 | | | | | | |
| | 4,4'-DAS | | | | | | | | | 1 | | | | | |
| | 3,3'-DAS | | | | | | | | | | 1 | | | | |
| Metal deactivator/ Antioxidant | CDA-1M | | | | | | | | | | | 0.5 | | | |
| | CDA-6 | | | | | | | | | | | | 0.5 | | |
| | Irganox MD 1024 | | | | | | | | | | | | | 0.5 | |
| | CDA-10 | | | | | | | | | | | | | | 0.5 |
| Evaluation | Anisole compatibility | ○ | ○ | ○ | Δ | × | Δ | ○ | ○ | ○ | ○ | × | × | Δ | Δ |
| | Exothermic onset temperature (°C) | × 2 | × 2 | × 2 | Δ | - | ⊚ | × 1 | × 1 | × 1 | × 1 | - | - | × 1 | × 1 |

### [Table 3]

**Table 3**

| | | Comparative Example | | | | |
|---|---|---|---|---|---|---|
| | | 15 | 16 | 17 | 18 | 19 |
| Compound (A) | Compound (1-1) | 20 | 20 | 20 | 20 | 20 |
| Solvent | Anisole | 60 | 60 | 60 | 60 | 60 |
| Adhesion/heat resistance imparting agent | TANAC P | 20 | | | | |
| | VD-5 | | 20 | | | |
| | MA-DGIC | | | 20 | | |
| | TEPIC-VL | | | | | |
| | TAIC | | | | 20 | |
| | TG-G | | | | | 20 |
| | DAG-G | | | | | |
| Evaluation | Anisole compatibility | × | × | ○ | ○ | ○ |
| | Exothermic onset temperature (°C) | - | - | Δ | × 1 | Δ |

### [Table 4]

**Table 4**

| | Curing time [min] | Substrate | Curing atmosphere | Glass transition temperature | Residual heat |
|---|---|---|---|---|---|
| Example 2 | 120 | Film | Air | ○ | ○ |
| Example 5 | 5 | Film | Air | ○ | ○ |
| | 120 | Copper plate | Air | ○ | ○ |
| Example 6 | 120 | Film | Air | ○ | ○ |
| | 120 | Copper plate | Air | ○ | ○ |
| Comparative Example 1 | 120 | Film | Nitrogen | ○ -- | ○ |
| | 120 | Film | Air | | × |

The components listed in the table are as follows.
<Organic nucleophile>
   GASKAMINE 240: trade name "GASKAMINE 240", available from MITSUBISHI GAS CHEMICAL COMPANY, INC., adduct of meta-xylylenediamine and styrene
   PX-4MP: trade name "HISHICOLIN PX-4MP", available from Nippon Chemical Industrial Co.,Ltd., tri-n-butylmethylphosphonium dimethylphosphite
   TBP-3S: trade name "TBP-3S", available from HOKKO SANGYO Co., LTD., tetrabutylphosphonium 2-carboxycyclohexanecarboxylate
   U-CAT SA-102: trade name "U-CAT SA-102", available from San-Apro Ltd., 2-ethylhexanoate salt of 1,8-diazabicyclo[5,4,0]-undecene-7
   GASKAMINE 328: trade name "GASKAMINE 328", available from MITSUBISHI GAS CHEMICAL COMPANY, INC., adduct of meta-xylylenediamine and epichlorohydrin
   2E4MZ: 2-ethyl-4-methylimidazole
   1B2MZ: 1-benzyl-2-methylimidazole
   U-CAT 3512T: trade name "U-CAT 3512T", available from San-Apro Ltd., aromatic urea
   U-CAT 3513N: trade name "U-CAT 3513N", available from San-Apro Ltd., aliphatic urea
   U-CAT SA-1: trade name "U-CAT SA-1", available from San-Apro Ltd., phenol salt of 1,8-diazabicyclo[5,4,0]-undecene-7
   DMAc: dimethylacetamide
   4,4'-DAS: 4,4'-diaminodiphenyl sulfone, available from Mitsui Chemicals Fine Inc.
   3,3'-DAS: 3,3'-diaminodiphenyl sulfone, available from MITSUI FINE CHEMICALS, INC.
<Maleimide>
   BMI-2300: trade name "BMI-2300", available from DAIWA FINE CHEMICALS CO., LTD., phenylmethane maleimide, compound represented by Formula (B-6a)
<Metal inactivator/antioxidant>
   Irganox MD 1024: trade name "Irganox MD 1024", available from BASF Japan Ltd., 2',3-bis[[3-[3,5-di-t-butyl-4-hydroxyphenyl]propionyl]]propionohydrazide, a compound represented by Formula (C-1)
   CDA-10: trade name "ADK STAB CDA-10", available from ADEKA Corporation, 2',3-bis[[3-[3,5-di-t-butyl-4-hydroxyphenyl]propionyl]]propionohydrazide, a compound represented by Formula (C-1)
   CDA-1M: trade name "ADK STAB CDA-1M", available from ADEKA Corporation
   CDA-6: trade name "ADK STAB CDA-6", available from ADEKA Corporation
<Radical initiator>
   PERCUMYL D: trade name "PERCUMYL D", available from NOF CORPORATION
   PERCUMYL Z: trade name "PERCUMYL Z", available from NOF CORPORATION
   PERHEXA HC: trade name "PERBEXA HC", available from NOF CORPORATION
<Adhesion/heat resistance imparting agent>
   TANAC P: trade name "TANAC P", available from SHIKOKU CHEMICALS CORPORATION
   VD-5: trade name "VD-5", available from SHIKOKU CHEMICALS CORPORATION
   MA-DGIC: trade name "MA-DGIC", available from SHIKOKU CHEMICALS CORPORATION
   TEPIC-VL: trade name "TEPIC-VL", available from SHIKOKU CHEMICALS CORPORATION
   TAIC: trade name "TAIC", available from SHIKOKU CHEMICALS CORPORATION
   TG-G: trade name "TG-G", available from SHIKOKU CHEMICALS CORPORATION
   DAG-G: trade name "DAG-G", available from SHIKOKU CHEMICALS CORPORATION

As shown in Table 1, the curable compositions of Examples were excellent in compatibility of the curable compound and the curing accelerator with anisole, and had a low exothermic onset temperature under an air atmosphere. Thus, the curable compositions of Examples were evaluated to be excellent in solvent solubility and curable at a low temperature in the presence of oxygen. On the other hand, as shown in Tables 2 and 3, when a curing accelerator other than the curing accelerator (B) was used, it was evaluated that the compatibility with anisole was poor (Comparative Examples 4 to 6 and 11 to 16) or the exothermic onset temperature was high (Comparative Examples 7 to 10, 13, 14, and 17 to 19). When a radical generator was used as the curing accelerator (B), exothermic onset was observed, but the radical generator was deactivated (Comparative Examples 1 to 3).

As shown in Table 4, the curable compositions of Examples 5 and 6 have high glass transition temperature and residual heat generation even when a cured product is formed on a copper plate, thus evaluated as excellent in stability of quality and usable for various types of substrates. On the other hand, as for the curable composition of Comparative Example 1, the glass transition temperature and the residual heat generation were high in the nitrogen atmosphere, but the residual heat generation was low in the air atmosphere, and the curable composition was evaluated as unusable. The cured product of the curable composition of Comparative Example 1 in an air atmosphere was very brittle, DMA measurement was not able to be performed, and the glass transition temperature was not able to be measured.

Hereinafter, variations of the invention according to the present disclosure will be described.

[Supplementary Note 1] A curable composition containing a compound (A) and a curing accelerator (B) described below:
the compound (A): a compound represented by Formula (1) shown below: 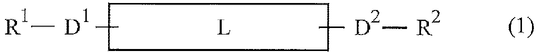
wherein R¹ and R² are the same or different, and each is a group represented by the Formula (r-1) shown below: 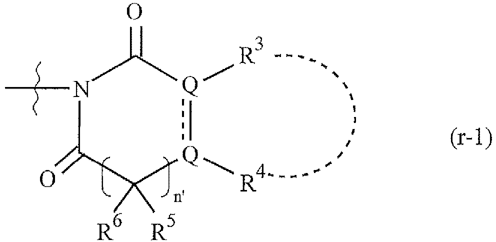
wherein Q is C or CH, two Qs are bound via a single bond or a double bond, R³ to R⁶ are the same or different, each is a hydrogen atom or a hydrocarbon group, R³ and R⁴ may be bound together to form a ring, n' is an integer equal to or greater than 0, and a bond with a wavy line binds to D¹ or D², wherein D¹ and D² are the same or different, and each is a single bond or a linking group, and L is a divalent group having a repeating unit including a structure represented by Formula (I) shown below and a structure represented by Formula (II) shown below: 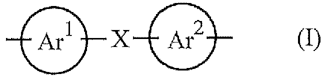 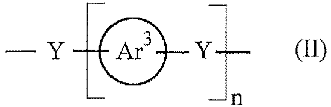
wherein Ar¹ to Ar³ are the same or different, and each is a group having a structural formula of an aromatic ring with two hydrogen atoms removed, or a group having a structural formula of two or more aromatic rings bound via a single bond or a linking group with two hydrogen atoms removed, X is -CO-, -S-, or -SO₂-, and Y is -S-, -SO₂-, -O-, -CO-, -COO-, or -CONH-, and n is an integer equal to or greater than 0;
the curing accelerator (B): one or more selected from the group consisting of: a reaction product of meta-xylylenediamine; a quaternary phosphonium salt; a phosphonium salt having a carboxy group; a 2-ethylhexanoate salt that is a thermally latent base generator and has a carboxy group; a secondary monoamine; an imidazole-based compound; and a low-molecular-weight maleimide.

[Supplementary Note 2] The curable composition according to Supplementary Note 1, in which the curing accelerator (B) contains an organic nucleophile that is the quaternary phosphonium salt.

[Supplementary Note 3] The curable composition according to Supplementary Note 1 or 2, further containing a compound (C) having a hindered phenol structure containing a hydrazine skeleton.

[Supplementary Note 4] The curable composition according to any one of Supplementary Notes 1 to 3, in which the curing accelerator (B) is contained in the curable composition in a content proportion of from 0.1 to 2 mass%.

[Supplementary Note 5] The curable composition according to any one of Supplementary Notes 1 to 4, in which the curable composition is capable of starting curing at 200°C or lower in the presence of oxygen.

[Supplementary Note 6] The curable composition according to any one of Supplementary Notes 1 to 5 that is cured and used as an insulating film covering a conductor wire.

[Supplementary Note 7] An insulated wire including a conductor wire and an insulating film that covers the conductor wire, the insulating film being a cured product of the curable composition according to Supplementary Note 6.

[Supplementary Note 8] A coil including the insulated wire according to Supplementary Note 7.

[Supplementary Note 9] A motor including the coil according to Supplementary Note 8.

[Supplementary Note 10] A generator including the coil according to Supplementary Note 8.

[Supplementary Note 11] An electronic or electric device including the coil according to Supplementary Note 8.

[Supplementary Note 12] A cable including the insulated wire according to Supplementary Note 7.

[Supplementary Note 13] An electronic or electric device including the cable according to Supplementary Note 12.

## Claims

1. A curable composition comprising a compound (A) and a curing accelerator (B) described below:
the compound (A): a compound represented by Formula (1) shown below: 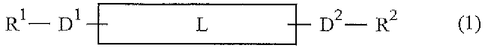
wherein R¹ and R² are the same or different, and each is a group represented by the Formula (r-1) shown below: 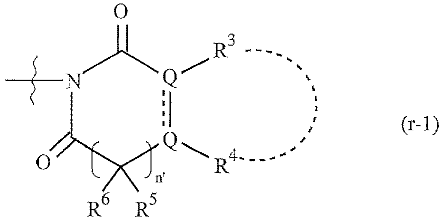
wherein Q is C or CH, two Qs are bound via a single bond or a double bond, R³ to R⁶ are the same or different, and each is a hydrogen atom or a hydrocarbon group, R³ and R⁴ are optionally bound together to form a ring, n' is an integer equal to or greater than 0, and a bond with a wavy line binds to D¹ or D², wherein D¹ and D² are the same or different, and each is a single bond or a linking group, and L is a divalent group having a repeating unit including a structure represented by Formula (I) shown below and a structure represented by Formula (II) shown below: 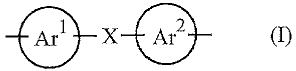 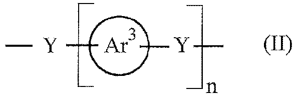
wherein Ar¹ to Ar³ are the same or different, and each is a group having a structural formula of an aromatic ring with two hydrogen atoms removed, or a group having a structural formula of two or more aromatic rings bound via a single bond or a linking group with two hydrogen atoms removed, X represents -CO-, -S-, or -SO₂-, Y is the same or different, and represents -S-, -SO₂-, -O-, -CO-, -COO-, or -CONH-, and n is an integer equal to or greater than 0;
the curing accelerator (B): one or more selected from the group consisting of: a reaction product of meta-xylylenediamine; a quaternary phosphonium salt; a phosphonium salt having a carboxy group; a 2-ethylhexanoate salt that is a thermally latent base generator and has a carboxy group; a secondary monoamine; an imidazole-based compound; and a low-molecular-weight maleimide.

2. The curable composition according to claim 1, wherein the curing accelerator (B) contains an organic nucleophile that is the quaternary phosphonium salt.

3. The curable composition according to claim 1 or 2, further comprising a compound (C) having a hindered phenol structure containing a hydrazine skeleton.

4. The curable composition according to claim 1 or 2, wherein the curing accelerator (B) is contained in the curable composition in a content proportion of from 0.1 to 2 mass%.

5. The curable composition according to claim 1 or 2, wherein the curable composition is capable of starting curing at 200°C or lower in the presence of oxygen.

6. The curable composition according to claim 1 or 2, wherein the curable composition is cured and used as an insulating film covering a conductor wire.

7. An insulated wire comprising a conductor wire and an insulating film that covers the conductor wire, the insulating film being a cured product of the curable composition according to claim 6.

8. A coil comprising the insulated wire according to claim 7.

9. A motor comprising the coil according to claim 8.

10. A generator comprising the coil according to claim 8.

11. An electronic or electric device comprising the coil according to claim 8.

12. A cable comprising the insulated wire according to claim 7.

13. An electronic or electric device comprising the cable according to claim 12.
